# EUROPÄISCHE PATENTSCHRIFT

(11) **EP 1 593 892 B1**
(45) Veröffentlichungstag und Bekanntmachung des Hinweises auf die Patenterteilung: **16.07.2008**
(21) Anmeldenummer: 05008463.1
(22) Anmeldetag: 19.04.2005
(51) Int. Cl.: F16K 37/00

(54) **Signalgeber**
Signal transmitter
Emmeteur de signaux

(30) Priorität: 03.05.2004 DE 102004021631
(43) Veröffentlichungstag der Anmeldung: 09.11.2005
(73) Patentinhaber: bar-pneumatische Steuerungssysteme GmbH, D-53547 Dattenberg (DE)
(72) Erfinder:
(74) Vertreter: Bauer, Dirk

(56) Entgegenhaltungen:
- WO-A-99/47841
- WO-A-02/097313
- US-A- 5 305 781

## Beschreibung

Die Erfindung betrifft ein Verfahren zur Einstellung eines Signalgebers für einen Stellantrieb, sowie einen Signalgeber, jeweils gemäß den Merkmalen des Oberbegriffs der Ansprüche 1 bzw. 2.

Signalgeber werden benötigt, um elektrische Signale über mechanische Zustände insbesondere von Armaturen, wie z.B. Kugelhähnen, Klappenventilen u.ä. und deren Stellantrieben zu geben. Einen typischen Anwendungsfall bildet dabei die Information über die Endlage bei Armaturen mit einstellbaren und damit variablen Schaltzuständen. Zur Ausführung der Schwenkbewegung der Armatur ist eine Antriebswelle des Schwenkantriebs mit der Armatur drehfest verbunden und die Drehbewegung der Armatur ist synchron zu der Drehbewegung der Antriebswelle. Zur Information über eine Endstellung der Armatur muss also lediglich die Drehbewegung der Antriebswelle des Stellantriebs erfasst werden. Bekanntermaßen werden dazu spezielle Signalgebereinrichtungen, kurz Signalgeber genannt, verwendet, die mit einer Schaltwelle in die Antriebswelle eingreifen und mit ihr eine gemeinsame Drehachse besitzen. Für die Rückmeldung über eine Endlage, also ob die Armatur geöffnet oder geschlossen ist, müssen bei einem bekannten Signalgeber Nocken so an der Schaltwelle befestigt und justiert werden, dass die jeweilige Endlage und der Schaltpunkt eines Schalters, gegen den die jeweilige Nocke bei Einnahme der Endlage anschlägt, exakt übereinstimmt. Signalgeber mit Schaltnocken und davon mechanisch betätigbaren Endschaltern sind dabei die übliche Variante zur Realisierung eines Schaltvorgangs, jedoch sind auch kontaktlose, d.h. induktive Verfahren bekannt.

Beispiele von Signalgebern sind zum Beispiel aus der US-A-5 305 781 oder der EP 0 921 338 B 1 bekannt, wobei die letztgenannte Schrift eine Innen bzw. Außenverzahnung für Schaltnocken und Schaltwelle vorsieht, die ineinander eingreifen und nach Art einer Rastkupplung elastisch justiert werden kann.

Allen bekannten Signalgebern ist gemeinsam, dass sie beim Einbau von Hand justiert werden müssen. Da Armaturen und deren Dichtungen während ihrer Lebensdauer einem Verschleiß unterliegen, müssen sie von Zeit zu Zeit nachgestellt werden. Dabei ist ebenfalls der Signalgeber nachzustellen, d. h. die Schaltnocken auf der Schaltwelle zu verschieben.

Nachteilig bei Handeinstellungen der Signalgeber ist der damit verbundene Arbeitsaufwand, die Möglichkeit von Einstellfehlern und das damit verbundene Risiko, dass der Schaltpunkt eines Schalters ungenau eingestellt wurde und dieser nicht mehr in einer Endlage schaltet.

Zu einer echten Gefahr kann sich ein solches Risiko im übrigen dann entwickeln, wenn besonders sensible Anlagen wie Chemiefabriken oder Atomreaktoren mit derartigen Armaturen bzw. deren Signalgebern ausgestattet sind.

Aufgabe der Erfindung ist es, ein Verfahren zur Einstellung eines Signalgebers für einen Stellantrieb sowie den Signalgeber selbst anzugeben, bei dem eine Handeinstellung und händige Nachjustierung entfallen kann.

Die Aufgabe wird dadurch gelöst, dass ein Verfahren angegeben wird, durch welches ein Betätigungskörper in einer beliebigen Stellung mit der Schaltwelle verbunden und der Stellantrieb in die eingestellte Endlage gefahren wird, wobei der Betätigungskörper vor Erreichen der Endlage gegen ein fest mit dem Gehäuse verbundenes Anschlagelement anschlägt und anschließend bei fortgesetzter Drehbewegung der Schaltwelle auf dieser solange durchrutscht, bis der Stellantrieb die Endlage erreicht hat und damit eingestellt ist. In Bezug auf den Signalgeber ist die Aufgabe gelöst durch ein jedem Schalter zugeordnetes Anschlagelement, gegen das der Betätigungskörper in der oder kurz hinter der Stellung anschlägt, in der der Schalter betätigt wird, wobei das Anschlagelement so ausgebildet und so fest mit dem Gehäuse verbunden ist, dass von ihm beim Anschlagen des Betätigungskörpers die sich aus dem Grenzmoment ergebende Kraft zerstörungsfrei aufnehmbar ist.

Durch das erfindungsgemäße Verfahren kann völlig auf eine Einstellung von Hand mit den dabei in Kauf zu nehmenden Toleranzen verzichtet werden, da sich der Signalgeber durch die erste Schwenkbewegung von selbst einstellt. Hierdurch wird eine sehr große Einsparung an Arbeitszeit d.h. Kosten erzielt. Die dabei erzielte Schalt-Toleranz, also der Winkel zwischen der Stellung zum Schaltzeitpunkt und der tatsächlichen Endlage, ist durch diesen Automatismus sehr viel genauer, als die bei der bekannten Einstellung von Hand. Ein weiterer Vorteil ist, dass die Schalt-Toleranz für eine gesamte Baureihe eines erfindungsgemäßen Signalgebers nebst Verfahren stets gleichbleibend ist, so dass Fehler im Schaltsystem wahrscheinlicher einzugrenzen und damit kalkulierbarer sind, da menschliches Versagen, welches durch Fehljustierung der Signalgeber stets vorkommen kann, von vorneherein ausgeschlossen wird.

Ein weiterer unmittelbarer Vorteil des Verfahrens ist die selbsttätige Einstellung des erfindungsgemäßen Verfahrens während des laufenden Betriebs, da durch die erfindungsgemäßen Verfahrensschritte bei jeder Vergrößerung des Schwenkwinkels zur Kompensation des Armaturverschleißes, wie sie in der Praxis fast ausschließlich vorkommen, sofort nach der veränderten Einstellung des Stellantriebs, die entsprechend veränderte Selbsteinstellung des Signalgebers erfolgt.

Die Ausbildung des Schalters kann selbstverständlich variiert werden, z. B. ist auch ein oben beschriebener induktiver Schalter durch einen Rückgriff auf ein entsprechendes Betätigungselement möglich. Der Schalter kann im übrigen auch durch das Betätigungselement und das Anschlagelement selbst gebildet sein, die in diesem Fall z.B. als elektrischer Leiter ausgebildet wären, wobei der Schaltvorgang bei einem Kontakt der beiden Bauteile miteinander ausgelöst werden würde. Allerdings stellt die mechanische Schalterausführung wohl die zur Zeit kostengünstigste Variante dar und soll deshalb eine bevorzugte Ausführungsform des Signalgebers sein.

Besonders bevorzugt soll außerdem sein, dass der Betätigungskörper mittels eines Federelements in axialer Richtung der Schaltwelle auf eine Stirnfläche derselben vorspannbar ist.

Durch die Vorspannung wird die Montage eines Betätigungskörpers innerhalb des Signalgebergehäuses vereinfacht und das Betätigungselement durch den Federdruck des Federelementes mit hinreichendem Reibschluss mit der Schaltwelle gekoppelt.

Eine erfindungsgemäße Weiterbildung soll sein, dass die Schaltwelle eine Schulter und einen sich an diese anschließenden im Durchmesser reduzierten Befestigungsabschnitt für den mindestens einen Betätigungskörper aufweist, der im Bereich einer Aufnahmebohrung mit Spiel von dem Befestigungsabschnitt durchdringbar ist, und dass das Federelement eine Druckfeder ist, die mittels eines Spannelements, das auf dem Befestigungsabschnitt verlagerbar ist, gegen die Schulter der Schaltwelle pressbar ist, weil dadurch gewährleistet wird, dass der Betätigungskörper sich radial frei drehen kann, jedoch in axialer Richtung eine definierte Position erhält.

Ebenfalls weitergebildet wird die Erfindung dadurch, dass der Befestigungsabschnitt mit einem Abschnitt mit einem Außengewinde versehen ist, auf dem eine als Spannelement dienende Spannmutter aufschraubbar ist.

Durch die vergleichsweise einfache Spanntechnik der Mutter, die zudem ein überall erhältliches Massengut sein kann, wird gewährleistet, dass ein Einbau des erfindungsgemäßen Signalgebers auch mit Standardwerkzeug durchführbar ist.

Weiterhin wird bevorzugt, dass zwischen zwei Betätigungskörpern, die axial beabstandet auf dem Befestigungsabschnitt der Schaltwelle angeordnet sind, ein drehfest mit der Schaltwelle verbundener Reibring angeordnet ist, da ein solcher Reibring durch seine Oberflächenstruktur schon bei einem leichten Andruck auf den Betätigungselementen einen ausreichenden Reibschluss gewährleistet, so dass ein verwendetes Spanneelement, wie etwa eine Spannmutter, mit entsprechend wenigem Kraftaufwand gespannt werden kann.

Weiterhin soll eine Weiterbildung der Erfindung sein, dass zwei Betätigungskörper ausgehend von einer Montagestellung, in der sie einen Winkel zwischen ihren Anschlagflächen einschließen, der kleiner als der zwischen den Anschlagelementen eingeschlossene Winkel ist, durch temporäres Absenken des Grenzmoments auf ein Aktivierungsmoment mittels einer Drehfeder, deren Federmoment größer als das Aktivierungsmoment ist, in eine Aktivierungsstellung überführbar sind, in der die Betätigungskörper an dem jeweils zugeordneten Anschlagelement anschlagen, wobei das Federmoment kleiner als das Grenzmoment ist.

Durch einen derartigen Aufbau des Signalgebers lässt sich dieser vereinfacht aktivieren. Durch geeignete Wahl der jeweiligen Momente kann dadurch sogar völlig auf Werkzeug verzichtet werden. Die Drehfeder sorgt dafür, dass beide Betätigungskörper bei Beginn des Einstellvorgangs automatisch an den Anschlagelementen anliegen.

Weiterhin soll eine erfindungsgemäße Weiterbildung sein, dass die Drehfeder eine um die Schaltwelle gewundene Biegefeder ist, die mit Endabschnitten in Öffnungen in den nocken- oder fingerförmigen Betätigungskörper eingreift. Durch dieses ebenfalls als Standardbauteil lieferbare und damit äußerst kostengünstige Element, lässt sich leicht ein Drehmoment zwischen dem Betätigungskörper und einem anderen Bauteil, etwa einem weiteren Betätigungskörper oder der Schaltwelle erzeugen.

Schließlich soll die Erfindung noch dadurch ausgestaltet werden, dass das Grenzmoment mittels eines federbelasteten Tastelements auf das Aktivierungselement absenkbar ist, wobei das Tastelement selbsttätig in der Grundstellung zurückkehrt, in der mit der Rutschkupplung das Grenzmoment übertragbar ist.

Ein Vorteil hierbei liegt in der einfachen Bedienbarkeit eines solchen Tastelements. Wird dieses außerdem durch ein Gehäuse des Signalgebers nach außen geführt, kann der erfindungsgemäße Signalgeber werkzeuglos auf einen Stellantrieb aufgesteckt werden und muss nur noch durch Knopfdruck aktiviert werden. Wo bei bekannten Signalgebern noch ein Fachmann bei der Montage benötigt wurde, kann bei einer derartigen Ausgestaltung auch eine Hilfskraft mit der Inbetriebnahme des erfindungsgemäßen Signalgebers betraut werden. Die Einstellung erfolgt mit Vollzug der ersten vollständigen Schwenkbewegung des Stellantriebs dann selbsttätig.

Die Erfindung wird nachfolgend anhand eines schematisierten Ausführungsbeispiels näher erläutert. Es zeigt:
Figur 1 eine Seitenansicht eines Signalgebers in einer Montagestellung,
Figur 2 eine Aufsicht auf den Signalgeber gemäß Figur 1,
Figur 3 eine perspektivische Ansicht auf den Signalgeber gemäß Figur 1,
Figur 4 einen Längsschnitt durch die Schaltwelle des Signalgebers gemäß Figur 1,
Figur 5 einen Querschnitt durch die Schaltwelle des Signalgebers gemäß Figur 1,
Figur 6 eine Seitenansicht des Signalgebers in einer Betriebsstellung,
Figur 7 eine Aufsicht auf den Signalgeber gemäß Figur 6,
Figur 8 eine perspektivische Ansicht auf den Signalgeber gemäß Figur 6,
Figur 9 einen Längsschnitt durch die Schaltwelle des Signalgebers gemäß Figur 6,
Figur 10 eine radialen Schnitt durch die Schaltwelle des Signalgebers gemäß Figur 6 und
Figur 11 eine Aufsicht auf den Signalgeber in einer Aktivierungsstellung.

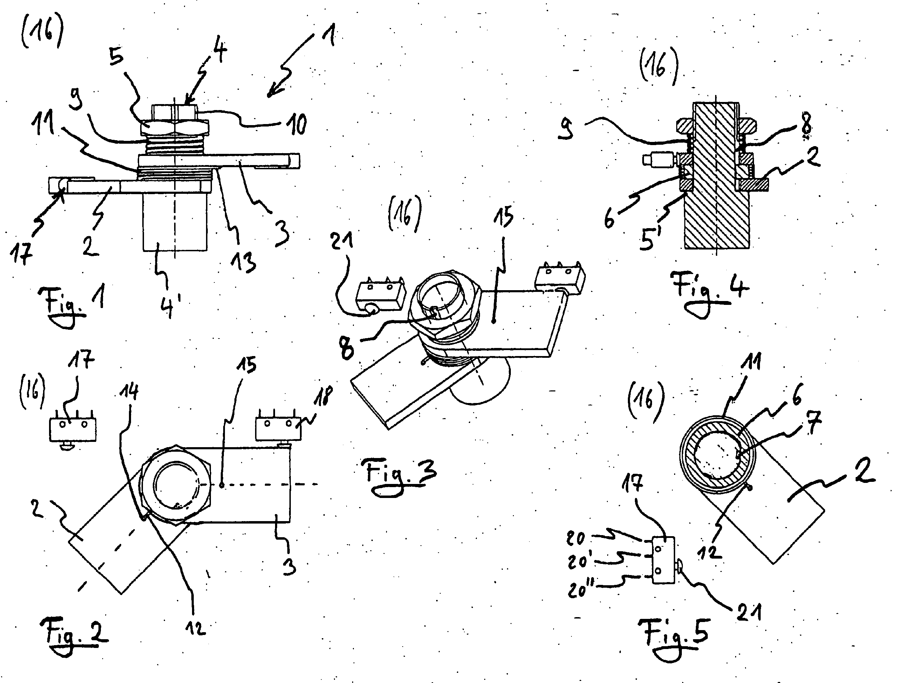

Fig.1 bis Fig. 5 zeigen einen erfindungsgemäßen Signalgeber 1 mit zwei Betätigungskörpern 2, 3. Die beiden Betätigungskörper 2, 3 sind auf einer Schaltwelle 4 mittels einer Spannmutter 5 befestigt. Das umschließende Gehäuse ist wegen der größeren Übersichtlichkeit nicht gezeigt und ebenfalls nicht, wie die Schaltwelle 4 mit ihrem unteren Abschnitt 4' drehbar durch das Gehäuse hindurchgeführt wird und dadurch auf einer hier ebenfalls nicht gezeigten Antriebswelle eines Stellantriebs drehfest ankoppelbar ist. Der untere Betätigungskörper 2 liegt direkt auf einer Schulter 5' der Schaltwelle 4 in Form einer radial umlaufenden Kante des unteren Abschnitts 4' der Schaltwelle 4 auf. Über dem Betätigungskörper 2 befindet sich ein Reibring 6, der mit einer Nase 7 in eine Nut 8 der Schaltwelle 4 eingreift und dadurch drehfest mit dieser verbunden ist. Über dem Reibring 6 liegt der zweite Betätigungskörper 3, welcher von einem Federelement 9 in Form einer Druckfeder nach unten gedrückt wird. Die Spannmutter 5 wirkt als eine Anschlagfläche des Federelements 9 und ist auf den Befestigungsabschnitt 10 in Form eines Außengewindes gespannt. Zwischen den beiden Betätigungskörpern 3, 4 und den Reibring 6 außen umschließend, befindet sich ein weiteres Federelement in Form einer gewundenen Biegefeder, d.h. Drehfeder 11. Die Drehfeder 11 greift mit ihren Endstücken 12, 13 in jeweils eine Öffnung 14, 15 der Betätigungskörper 2, 3 ein und übt aufgrund ihrer Vorspannung ein gewisses Drehmoment auf die beiden Betätigungskörper 2, 3 aus.

In der in den Figuren 1 bis 5 gezeigten Montagestellung 16 wird nur ein solches Drehmoment von der Drehfeder 11 ausgeübt, dass das von der Spannmutter 5 und der Druckfeder bewirkte Reibmoment zwischen den Betätigungskörpern 2, 3 und der Schaltwelle 4 größer ist als das Federmoment und daher die Winkelstellung der Betätigungskörper 2, 3 zueinander erhalten bleibt. Der von den beiden Betätigungskörpern 2, 3 eingeschlossene Montagewinkel beträgt im übrigen etwa 135 Grad und ist damit erheblich kleiner, als der von den Schaltern 17, 18 eingeschlossene halbe Winkel. Ebenfalls in den Figuren gezeigt sind noch zwei mechanisch betätigbare Schalter 17, 18, bzw. in der Fig. 5 nur ein Schalter 17 in Form von Mikroschaltern mit jeweils drei elektrisch leitenden Anschlüssen 20, 20', 20" und einem Druckknopf, der im eingedrückten Zustand als Anschlagelement 21, 21' wirkt. Die Schalter 17, 18 sind entsprechend den unterschiedlichen Montagehöhen der Betätigungskörper 2, 3 am Gehäuse befestigt, wobei auch hier wegen der größeren Übersicht, die Befestigung nicht gezeigt wird.

Im folgenden soll die Vorgehensweise beim Einstellen des gezeigten Signalgebers 1 näher erläutert werden:

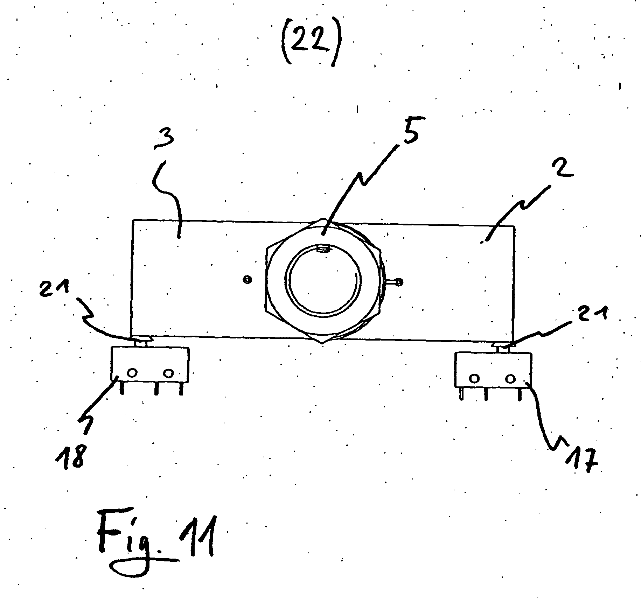

In der Fig. 11 wird eine Aktivierungsstellung 22 gezeigt, bei der die Spannmutter 5 gegenüber der Stellung in Fig. 1 bis 5 soweit gelöst ist, dass die Druckfeder und die Betätigungskörper 2, 3 in axialer Richtung spannungsfrei sind. Die Drehfeder 11 drückt die beiden Betätigungskörper 2, 3, da kein Reibschluss vorliegt, gegen die Druckknöpfe 21, 21' der Schalter 17, 18, so dass die beiden Schalter 17, 18 in diesem Zustand geschaltet sind.

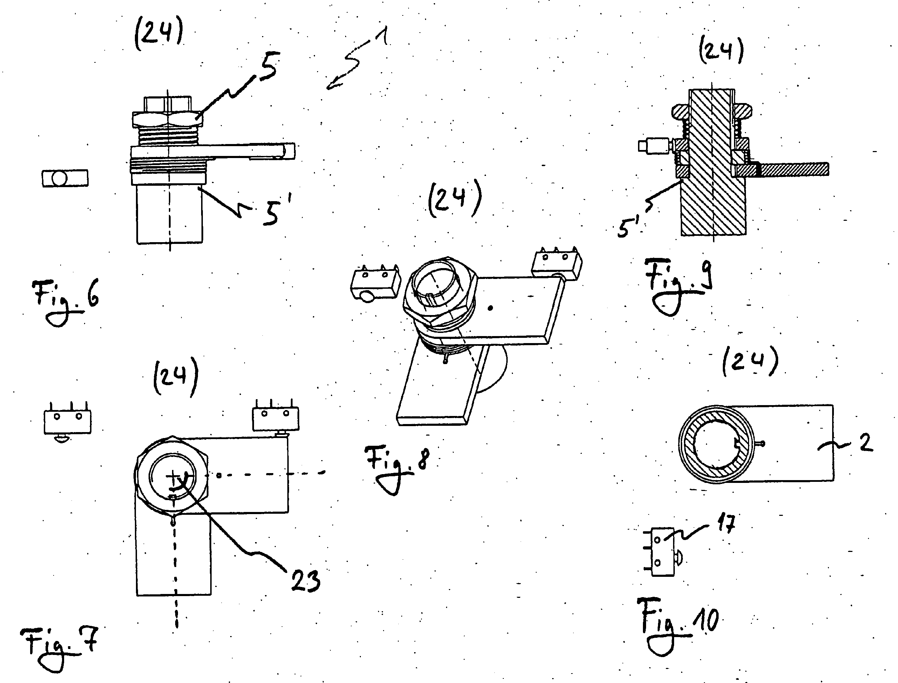

Die Spannmutter 5 wird anschließend angezogen, womit der Reibschluss wieder hergestellt wird und normalerweise gleichzeitig die Handmontage beendet ist. Wird nun der Stellantrieb betätigt, wobei der Schwenkwinkel 23 z. B. 90 Grad beträgt, muss je einmal in beide Endstellungen gefahren werden, also einmal mit und gegen den Uhrzeigersinn. Die Betätigungskörper 2, 3 rutschen durch, sobald sie während dieser Stellfahrt gegen die Druckknöpfe der Schalter gefahren werden. Dabei wirken die Druckknöpfe im eingedrückten Zustand als Anschlagelemente 21, 21' und hemmen die Betätigungskörper 2, 3 an weiterer Drehung. Dies geschieht solang, bis die jeweilige Endlage des Stellantriebs erreicht ist. Zur Verdeutlichung sollen diesmal die Fig. 1 bis 5 einen Zwischenstand der Stellfahrt zeigen, und zwar zum Zeitpunkt wo, ausgehend von Fig. 11, einmal 55 Grad im Gegenuhrzeigersinn gefahren wurde. Die Endposition ist schließlich in den Fig. 6 bis 10 als Betriebsstellung 24 gezeigt, wobei, wiederum ausgehend von der Fig. 11, einmal 90 Grad im Uhrzeigersinn und zurück gefahren wurde.
Wird in der Monagestellung 16 die Spannmutter 5 gelöst, so ergibt sich wiederum die in der in Fig. 11 gezeigte Aktivierungsstellung 22 und der Stellantrieb kann neu eingestellt werden.

### Bezugszeichenliste

- 1: Signalgeber
- 2, 3: Betätigungskörper
- 4: Schaltwelle
- 4': Abschnitt
- 5: Spannmutter
- 5': Schulter
- 6: Reibring
- 7: Nase
- 8: Nut
- 9: Federelement
- 10: Befestigungsabschnitt
- 11: Drehfeder
- 12, 13: Ensstück
- 14, 15: Öffnung
- 16: Montagestellung
- 17, 18: Schalter
- 20: Anschluss
- 20': Anschluss
- 20": Anschluss
- 21, 21': Anschlagelement
- 22: Aktivierungsstellung
- 23: Betriebsstellung

## Patentansprüche

1. Verfahren zur Einstellung eines Signalgebers (1) für einen Stellantrieb zur Betätigung einer Armatur, wobei der Signalgeber mit einem Gehäuse, einer darin drehbar gelagerten Schaltwelle 4, die mit einer Betätigungswelle des Stellantriebs drehfest kuppelbar ist, mit mindestens einem Betätigungskörper (2, 3), der mit der Schaltwelle (4) über eine Rutschkupplung verbindbar ist, und mit mindestens einem Schalter (17, 18) versehen ist, der von dem Betätigungskörper (2,3) betätigbar ist, wobei die Rutschkupplung bis zu einem Grenzwert eine drehfeste Verbindung zwischen dem Befestigungskörper (2, 3) und der Schaltwelle (4) bildet und bei Überschreiten des Grenzmoments ein wiederholtes, zerstörungsfreies Durchrutschen erlaubt, wobei das Grenzmoment größer ist als ein Betätigungsmoment, das erforderlich ist, um mittels des Betätigungskörpers (2, 3) den Schalter (4) zu betätigen, wobei in einem ersten Schritt, entsprechend mindestens einer gewünschten Endstellung der zu betätigenden Armatur mindestes eine Endlage des Stellantriebs durch Einstellmittel desselben eingestellt wird oder eingestellt worden ist, **gekennzeichnet durch** folgende Verfahrensschritte
a) Der Betätigungskörper (2, 3) wird in einer beliebigen Stellung mit der Schaltwelle (4) verbunden
b) Der Stellantrieb wird in die eingestellte Endlage gefahren, wobei der Betätigungskörper vor Erreichen der Endlage gegen ein fest mit dem Gehäuse verbundenes Anschlagelement (21, 21') anschlägt und anschließend bei fortgesetzter Drehbewegung der Schaltwelle (4) auf dieser solange durchrutscht bis der Stellantrieb die Endlage erreicht hat und damit eingestellt ist.

2. Signalgeber (1) für einen Stellantrieb zur Betätigung einer Armatur, mit einem Gehäuse, einer darin drehbar gelagerten Schaltwelle (4), die mit einer Betätigungswelle des Stellantriebs drehfest kuppelbar ist, mindestens einem Betätigungskörper (2,3), der mit der Schaltwelle (4) über eine Rutschkupplung verbindbar ist, und mit mindestens einem Schalter (17, 18), der von dem Betätigungskörper (2, 3) betätigbar ist, wobei die Rutschkupplung bis zu einem Grenzmoment eine drehfeste Verbindung zwischen dem Betätigungskörper (2, 3) und der Schaltwelle (4) bildet und bei Überschreiten des Grenzmoments ein wiederholtes, zerstörungsfreies Durchrutschen erlaubt, wobei das Grenzmoment größer ist als ein Betätigungsmoment, das erforderlich ist, um mittels des Betätigungskörpers (2, 3) den Schalter (17, 18) zu betätigen, **gekennzeichnet durch** ein jedem Schalter (4) zugeordnetes Anschlagelement (21, 21'), gegen das der Betätigungskörper (2, 3) in der oder kurz hinter der Stellung anschlägt, in der der Schalter betätigt wird, wobei das Anschlagelement (21, 21') so ausgebildest und so fest mit dem Gehäuse verbunden ist, dass von ihm beim Anschlagen des Betätigungskörpers (2, 3) die sich aus dem Grenzmoment ergebende Kraft zerstörungsfrei aufnehmbar ist.

3. Signalgeber (1) nach Anspruch 2, **dadurch gekennzeichnet, dass** das Anschlagelement (21, 21') von einem vorzugsweise mechanisch betätigbaren Schalter (17, 18) selbst gebildet ist.

4. Signalgeber (1) nach mindestens einem der Ansprüche 2 oder 3, **dadurch gekennzeichnet, dass** der Betätigungskörper (2, 3) mittels eines Federelements (9) in axialer Richtung der Schaltwelle (4) auf eine Stirnfläche derselben vorspannbar ist.

5. Signalgeber (1) nach Anspruch 4, **dadurch gekennzeichnet, dass** die Schaltwelle (4) eine Schulter (5') und einen sich an diese anschließenden im Durchmesser reduzierten Befestigungsabschnitt (10) für den mindestens einen Betätigungskörper (2, 3) aufweist, der im Bereich einer Aufnahmebohrung mit Spiel von dem Befestigungsabschnitt (10) durchdringbar ist, und dass das Federelement (9) eine Druckfeder ist, die mittels eines Spannelements (5), das auf dem Befestigungsabschnitt (10) verlagerbar ist, gegen die Schulter (5') der Schaltwelle (4) pressbar ist.

6. Signalgeber (1) nach Anspruch 5, **dadurch gekennzeichnet, dass** der Befestigungsabschnitt (10) mit einem Abschnitt mit einem Außengewinde versehen ist, auf dem eine als Spannelement (5) dienende Spannmutter aufschraubbar ist.

7. Signalgeber (1) nach mindestens einem der Ansprüche 5 oder 6, **dadurch gekennzeichnet, dass** zwischen zwei Betätigungskörpern (2, 3), die axial beabstandet auf dem Befestigungsabschnitt der Schaltwelle (4) angeordnet sind, ein drehfest mit der Schaltwelle (4) verbundener Reibring (6) angeordnet ist.

8. Signalgeber (1) nach mindestens einem der Ansprüche 2 bis 7, **dadurch gekennzeichnet, dass** zwei Betätigungskörper (2, 3) ausgehend von einer Montagestellung (16), in der sie einen Winkel zwischen ihren Anschlagflächen einschließen, der kleiner als der zwischen den Anschlagelementen eingeschlossene Winkel ist, durch temporäres Absenken des Grenzmoments auf ein Aktivierungsmoment mittels einer Drehfeder (11), deren Federmoment größer als das Betätigungsmoment ist, in eine Aktivierungsstellung (22) überführbar sind, in der die Betätigungskörper (2, 3) an dem jeweils zugeordneten Anschlagelement (21, 21') anschlagen, wobei das Federmoment kleiner als das Grenzmoment ist.

9. Signalgeber (1) nach Anspruch 8, **dadurch gekennzeichnet, dass** die Drehfeder (11) eine um die Schaltwelle gewundene Biegefeder ist, die mit Endabschnitten (12, 13) in Öffnungen (14, 15) in den nocken- oder fingerförmigen Betätigungskörper (2, 3) eingreift.

10. Signalgeber (1) nach mindestens einem der Ansprüche 2 bis 7, **dadurch gekennzeichnet, dass** das Grenzmoment mittels eines federbelasteten Tastelements auf das Aktivierungselement absenkbar ist, wobei das Tastelement selbsttätig in der Grundstellung zurückkehrt, in der mit der Rutschkupplung das Grenzmoment übertragbar ist.

## Claims

1. A method for setting a signal transmitter (1) for an actuator for actuating an armature, the signal transmitter being provided with a housing, a switching shaft (4) mounted so it is rotatable therein, which may be coupled rotationally fixed to an actuating shaft of the actuator, with at least one actuating body (2, 3), which is connectable to the switching shaft (4) via a slip clutch, and with at least one switch (17, 18), which is actuatable by the actuating body (2, 3), the slip clutch forming a rotationally-fixed connection between the fastening body (2, 3) and the switching shaft (4) up to a limiting value and allowing repeated, nondestructive slipping through if the limiting torque is exceeded, the limiting torque being greater than an actuating torque which is required to actuate the switch (4) using the actuating body (2, 3), in a first step, corresponding to at least one desired final position of the armature to be actuated, at least one final location of the actuator being set or having been set by setting means thereof, **characterized by** the following method steps
a) the actuating body (2, 3) is connected to the switching shaft (4) in an arbitrary position
b) the actuator is moved into the set final location, the actuating body striking against a stop element (21, 21') connected fixed to the housing before reaching the final location and subsequently, upon continued rotational movement of the switching shaft (4), slipping through thereon until the actuator has reached the final location and is thus set.

2. A signal transmitter (1) for an actuator for actuating an armature, having a housing, a switching shaft (4), mounted so it is rotatable therein, which may be coupled rotationally fixed to an actuating shaft of the actuator, at least one actuating body (2, 3), which is connectable to the switching shaft (4) via a slip clutch, and having at least one switch (17, 18), which is actuatable by the actuating body (2, 3), the slip clutch forming a rotationally-fixed connection between the actuating body (2, 3) and the switching shaft (4) up to a limiting torque and allowing repeated, nondestructive slipping through if the limiting torque is exceeded, the limiting torque being greater than an actuating torque which is required to actuate the switch (17, 18) using the actuating body (2, 3), **characterized by** a stop element (21,21') assigned to each switch (4), against which the actuating body (2, 3) stops in or shortly behind the position in which the switch is actuated, the stop element (21, 21') being implemented and connected fixed to the housing so that the force resulting from the limiting torque is absorbable nondestructively thereby when the actuating body (2, 3) is stopped.

3. The signal transmitter (1) according to Claim 2, **characterized in that** the stop element (21, 21') is formed by a preferably mechanically actuatable switch (17, 18) itself.

4. The signal transmitter (1) according to at least one of Claims 2 or 3, **characterized in that** the actuating body (2, 3) may be pretensioned on the front face of the switching shaft (4) in its axial direction using a spring element (9).

5. The signal transmitter (1) according to Claim 4, **characterized in that** the switching shaft (4) has a shoulder (5') and an adjoining fastening section (10), which is reduced in diameter, for the at least one actuating body (2, 3), which may be penetrated in the area of a receptacle hole with play by the fastening section (10), and the spring element (9) is a compression spring, which may be pressed against the shoulder (5') of the switching shaft (4) using a clamping element (5), which is displaceable on the fastening section (10).

6. The signal transmitter (1) according to Claim 5, **characterized in that** the fastening section (10) is provided with a section having an external thread, onto which a clamping nut used as a clamping element (5) may be screwed.

7. The signal transmitter (1) according to at least one of Claims 5 or 6, **characterized in that** a friction ring (6) connected rotationally fixed to the switching shaft (4) is situated between two actuating bodies (2, 3), which are situated axially spaced apart on the fastening section of the switching shaft (4).

8. The signal transmitter (1) according to at least one of Claims 2 through 7, **characterized in that** two actuating bodies (2, 3), starting from a mounting position (16), in which they enclose an angle between their stop faces which is less than the angle enclosed between the stop elements, are transferable, by temporary reduction of the limiting torque to an activation torque using a torsion spring (11), whose spring torque is greater than the actuating torque, into an activation position (22), in which the actuating bodies (2, 3) stop on the particular assigned stop element (21, 21'), the spring torque being less than the limiting torque.

9. The signal transmitter (1) according to Claim 8, **characterized in that** the torsion spring (11) is a spiral spring wound around the switching shaft, which engages with end sections (12, 13) in openings (14, 15) in the cam-shaped or finger-shaped actuating bodies (2, 3).

10. The signal transmitter (1) according to at least one of Claims 2 through 7, **characterized in that** the limiting torque is reducible using a spring-loaded touch element on the activation element, the touch element automatically returning into the base position, in which the limiting torque is transferable using the slip clutch.

## Revendications

1. Procédé pour le réglage d'un générateur de signaux (1) pour un entraînement de réglage destiné à l'actionnement d'un appareil de robinetterie, lequel générateur de signaux est muni d'un boîtier, d'un arbre de commutation (4) disposé dans celui-ci avec possibilité de rotation et pouvant être couplé de manière solidaire en rotation avec un arbre d'actionnement de l'entraînement de réglage, avec au moins un élément d'actionnement (2, 3), qui peut être relié à l'arbre de commutation (4) par un accouplement à glissement, et avec au moins un commutateur (17, 18) qui peut être actionné par l'élément d'actionnement (2, 3), l'accouplement à glissement formant jusqu'à la limite une liaison solidaire en rotation entre l'élément de fixation (2, 3) et l'arbre de commutation (4) et permettant, si le couple limite est dépassé, un glissement répété et non destructif, le couple limite étant supérieur à un couple d'actionnement nécessaire pour actionner le commutateur (4) au moyen de l'élément d'actionnement (2, 3), dans lequel, dans une première étape, en fonction d'au moins une position finale souhaitée de l'appareil de robinetterie à actionner, au moins une position de fin de course de l'entraînement de réglage est ajustée ou a été ajustée par des moyens de réglage de celui-ci, **caractérisé en ce que** :
a) l'élément d'actionnement (2, 3) est relié à l'arbre de commutation (4) dans une position indifférente;
b) l'entraînement de réglage est amené dans la position de fin de course réglée, l'élément d'actionnement butant, avant que la position de fin de course soit atteinte, contre un élément de butée (21, 21') fixé au boîtier et glissant ensuite sur celui-ci, lorsque la rotation de l'arbre de commutation (4) se poursuit, jusqu'à ce que l'entraînement de réglage ait atteint la position de fin de course et soit ainsi réglé.

2. Générateur de signaux (1) pour un entraînement de réglage destiné à l'actionnement d'un appareil de robinetterie, avec un boîtier, un arbre de commutation (4) supporté dans celui-ci avec possibilité de rotation et pouvant être couplé de manière solidaire en rotation avec un arbre d'actionnement de l'entraînement de réglage, au moins un élément d'actionnement (2, 3) pouvant être relié à l'arbre de commutation (4) par un accouplement à glissement et au moins un commutateur (17, 18) qui peut être actionné par l'élément d'actionnement (2, 3), dans lequel l'accouplement à glissement forme, jusqu'à un couple limite, une liaison solidaire en rotation entre l'élément d'actionnement (2, 3) et l'arbre de commutation (4) et, lorsque le couple limite est dépassé, permet un glissement répété et non destructif, le couple limite étant supérieur à un couple d'actionnement nécessaire pour actionner le commutateur (17, 18) au moyen de l'élément d'actionnement (2, 3), **caractérisé en ce qu'**il comporte un élément de butée (21, 21') associé à chaque commutateur (4), contre lequel l'élément d'actionnement (2, 3) bute dans ou peu après la position dans laquelle le commutateur est actionné, l'élément de butée (21, 21') étant conformé et fixé au boîtier de telle sorte que la force qu'il produit lorsque l'élément d'actionnement (2, 3) vient en butée et qui résulte du couple limite puisse être absorbée sans destructions.

3. Générateur de signaux (1) selon la revendication 2, **caractérisé en ce que** l'élément de butée (21, 21') est formé lui-même par un commutateur (17, 18) à actionnement de préférence mécanique.

4. Générateur de signaux (1) selon l'une au moins des revendications 2 ou 3, **caractérisé en ce que** l'élément d'actionnement (2, 3) peut être précontraint au moyen d'un élément de ressort (9) dans le sens axial de l'arbre de commutation (4) vers une face d'extrémité de celui-ci.

5. Générateur de signaux (1) selon la revendication 4, **caractérisé en ce que** l'arbre de commutation (4) présente un épaulement (5') et une section de fixation (10) de diamètre réduit faisant suite à celui-ci pour l'au moins un élément d'actionnement (2, 3), qui peut être traversé avec un jeu au niveau de l'alésage de logement par la section de fixation (10), et **en ce que** l'élément de ressort (9) est un ressort de compression au moyen duquel un élément de serrage (5) déplaçable sur la section de fixation (10) peut être pressé contre l'épaulement (5') de l'arbre de commutation (4).

6. Générateur de signaux (1) selon la revendication 5, **caractérisé en ce que** la section de fixation (10) possède une section avec un filetage extérieur sur lequel un écrou de serrage servant d'élément de serrage (5) peut être vissé.

7. Générateur de signaux (1) selon l'une au moins des revendications 5 ou 6, **caractérisé en ce qu'**il est prévu entre deux éléments d'actionnement (2, 3), disposés à distance dans le sens axial sur la section de fixation de l'arbre de commutation (4) une bague de frottement (6) reliée de manière solidaire en rotation avec l'arbre de commutation (4).

8. Générateur de signaux (1) selon l'une au moins des revendications 2 à 7, **caractérisé en ce que** deux éléments d'actionnement (2, 3) peuvent, à partir d'une position de montage (16), dans laquelle ils forment un angle entre leurs surfaces de butée qui est plus petit que l'angle formé entre les éléments de butée, être amenés, par la réduction temporaire du couple limite à un couple d'activation d'un ressort de torsion (11) dont le moment d'élasticité est supérieur au couple d'actionnement, dans une position d'activation (22) dans laquelle les éléments d'actionnement (2, 3) butent sur les éléments de butée (21, 21') correspondants, le moment d'élasticité étant inférieur au couple limite.

9. Générateur de signaux (1) selon la revendication 8, **caractérisé en ce que** le ressort de torsion (11) est un ressort de flexion enroulé autour de l'arbre de commutation, qui se met en prise par ses sections d'extrémité (12, 13) dans des ouvertures (14, 15) des éléments d'actionnement (2, 3) en forme de came ou de pattes.

10. Générateur de signaux (1) selon l'une au moins des revendications 2 à 7, **caractérisé en ce que** le couple limite peut être réduit au moyen d'un élément palpeur chargé par ressort sur l'élément d'activation, lequel élément palpeur revient de lui-même dans la position de base dans laquelle le couple limite peut être transmis par l'accouplement à glissement.
